# EUROPEAN PATENT APPLICATION

(11) **EP 4 549 758 A1**
(43) Date of publication of application: **07.05.2025**
(21) Application number: 24162167.1
(22) Date of filing: 07.03.2024
(51) Int. Cl.: F16B 37/00, F16B 5/02, F16B 5/06, F16B 3/06, F16B 2/00, F16B 37/04

(54) **NUT SLEEVE WITH LOCKING AND ALIGNMENT FEATURES**

(30) Priority: 02.11.2023 EP 23207472; 27.02.2024 EP 24159985
(71) Applicant: Volvo Car Corporation, 405 31 Göteborg (SE)
(72) Inventor: Skagius, Adam, 413 18 Göteborg (SE); Nordell, Magnus, 425 65 Hisings Kärra (SE); Brandin, Tobias, 44295 Halta (SE)
(74) Representative: Nederlandsch Octrooibureau

(57) **Abstract**

A nut comprising a sleeve extending from a nut head of the nut and configured to extend into a first receiving part and a second receiving part, wherein the sleeve comprises; an exterior surface configured to engage with the first receiving part and the second receiving part; and a hollow interior configured to receive a bolt shaft, wherein the sleeve aligns the first receiving part and the second receiving part.

## Description

### Technical Field

The present disclosure relates to the fastener field, in particular nuts having sleeves used in conjunction with bolts or screws in an assembly.

### Background of the Present Disclosure

Bolts and screws may join one or more receiving parts at a bolted joint or a screw joint. For brevity, the term bolt will be used to mean a bolt or a screw. Additionally, the term bolted joint will be used to mean a bolted joint or a screw joint.

A serration bolt may have serrations on its shank to create a locking feature at the bolted joint and therefore avoid slipping. The serrations may avoid slipping by creating a clamping force at the bolted joint. Generally, the larger the bolt the larger the clamping force it can generate. Serration bolts, having serrations on its shank, have been used to downsize bolts while maintaining the necessary clamping force at the bolted joint when assembling receiving parts.

However, serration bolts require access to both sides of a receiving part during assembly. For example, a first side of the assembly may require enough clearance to insert the serration bolt and a second side of the assembly may require enough clearance for a tightening tool to fully assemble the receiving part(s) with the serration bolt.

There is a trend to make things smaller and more compact. For example, vehicle engines have become compact, which reduces the space for access to the tip of a bolt or the head of a bolt needed to assemble the engine. Once the bolt is in its final position, it may be difficult to access the bolt at both ends to loosen or tighten it.

Additionally, the bolted joint may be subject to shear forces which make the bolt slip. To withstand the shear forces and prohibit the bolt from slipping, one may use larger bolts to generate more friction or clamping force, as compared to a smaller bolt, and prevent the bolt from slipping. However, larger bolts are in conflict with the trend to make things smaller and more compact.

The background section relating to using serration bolts in the assembly of receiving part(s) is merely intended to provide a contextual overview of some current issues and is not intended to be exhaustive. Other contextual information may become apparent to a person of skill in the art upon review of the following detailed description.

### Summary of the Present Disclosure

According to an embodiment, a nut may include a sleeve extending perpendicularly from a nut head the nut and configured to extend into a first receiving part and a second receiving part, wherein the sleeve includes; an exterior surface configured to engage with the first receiving part and the second receiving part; and a hollow interior configured to receive a bolt shaft, wherein the sleeve aligns the first receiving part and the second receiving part. The sleeve may be configured to press fit into the first receiving part and the second receiving part such that the nut does not easily rotate, and the exterior surface generates a mechanical lock between the nut, the first receiving part, and the second receiving part.

A nut with a sleeve configured to press fit into one or more receiving parts generates an interference between the sleeve of the nut and the receiving parts in which the sleeve of the nut is forced into an opening of the receiving parts.

The sleeve of the nut may extend through the receiving parts to align the receiving parts such that they are assembled into a desired position.

The exterior surface of a sleeve of the nut may create a mechanical lock between the sleeve receiving parts. The sleeve helps to support a bolt used in assembling the receiving part and reduces the load of shear forces acting upon the bolt. This may help minimize or prevent slippage. In particular, the exterior surface of the sleeve creates friction or clamping forces between the sleeve and a surface of the receiving parts. The sleeve reduces the shear area to which the bolt is exposed and reduces the exposure of a bolt to shear forces.

The mechanical lock of the sleeve may shield a bolted joint from shear forces. This allows an assembly to reduce the size of bolts due to the reduced shear forces acting on the bolted joint. Reducing bolt size can be done without sacrificing clamping force because, as compared to a conventional nut, the mechanical lock reduces the need of a high clamping force. Therefore, such an assembly may replace conventional nuts with nuts including a sleeve because the sleeve may shield the bolted joint from shear forces. Reducing the bolt sizes in an assembly may reduce cost, materials and weight of an assembly.

The nut with sleeve may be used in combination with a serrated bolt to generate a mechanical lock at both bolted joints.

Including a nut with a sleeve can further reduce part handling and piece price because the reduced bolt size requires less assembly torque as compared to a larger bolt. As a result, there is a potential for using smaller tools during assembly.

According to an embodiment, the hollow interior of the sleeve is threaded. The threads of the hollow interior are configured to engage with the threaded portion of a bolt shaft. Such an engagement between the sleeve of the nut and the bolt generates a stronger connection between the nut and the bolt as compared to a sleeve of a nut without threads.

According to an embodiment, the exterior surface of the sleeve is configured to generate a mechanical lock between the sleeve, the first receiving part, and the second receiving part. Such a mechanical lock may minimize or prevent slipping at the bolted.

According to an embodiment, the nut is formed of a ferrous material. Ferrous materials, such as phosphorous steel, are strong and cost-effective materials that may be suitable for vehicle parts. Other materials may be suitable for other applications. In addition to being strong and cost effective, ferrous materials are readily available. Nuts made of ferrous materials are able to generate a strong mechanical lock between the sleeve of the nut and a receiving part thereby helping to reduce the shear forces that may act upon a bolt or screw.

According to an embodiment, the sleeve of the nut includes an exterior surface that is knurled and/or includes serrations. Such a knurled exterior surface creates friction and/or clamping forces between the sleeve and a receiving part of an assembly, and therefore may create a mechanical lock between the sleeve and a receiving part. Such a mechanical lock between the sleeve and the receiving part allows the sleeve to absorb shear forces that would otherwise act on the bolted joint. The friction, locking and/or clamping force helps to minimize or prevents slippage. The sleeve may include other textures on the exterior surface capable of providing the necessary friction and/or clamping force.

According to an embodiment, the exterior surface of the sleeve of the nut may be smooth. Such a smooth surface may make it easier to insert the nut into receiving parts as compared to a nut with a knurled exterior surface while still generating a mechanical lock between the sleeve and the receiving parts.

According to an embodiment, a circumference of the sleeve is configured to insert into a first opening of the first receiving part and a second opening of the second receiving part, and the exterior surface is in contact with the first receiving part and the second receiving part. The contact between the exterior surface of the sleeve and the receiving parts is such that it ensures a mechanical lock between the nut and the receiving parts.

According to an embodiment, the nut is fixed as the bolt shaft of a bolt engages with the nut. The nut may be fixed because of friction forces acting between the exterior surface of the sleeve of the nut and the receiving parts. Once the nut is inserted into the receiving parts the fixed nut allows tightening of the bolt without access to the nut side of the assembly. As the bolt rotates and engages with the threads of the nut, the receiving parts are assembled with a single tightening tool acting upon a head of the bolt.

According to an embodiment, an assembly may include a nut as previously described. The assembly may further include a first receiving part; a second receiving part; and a bolt, wherein a sleeve of the nut enters the assembly at the first receiving part and extends through to the second receiving part, and wherein the bolt enters a hollow interior of the sleeve at the second receiving part. The sleeve of the nut extends through both receiving parts to align the receiving parts into a desired configuration. The bolt may be inserted into the second receiving part such that an opening of the second receiving part may be larger than the circumference of at least a portion of the bolt shaft. Such an opening at the second receiving part enables the bolt to enter the assembly at a desired alignment with the nut.

A method of assembling an assembly with the nut as previously described and a bolt allows the bolt to be tightened or loosened without disturbing the mechanical lock between the sleeve of the nut and the receiving part.

According to an embodiment, the bolt is configured to rotate to engage with the nut. This allows assembling of the assembly from a head of the bolt. Rotating the bolt engages a threaded portions of the bolt shaft with the threads of the nut.

According to an embodiment, the assembly includes a clearance for a tightening tool at a head of the bolt, wherein the tightening tool rotates the bolt to engage the nut and assemble the assembly hollow interior of the sleeve. The clearance ensures access to the bolt head to tighten or loosen the bolt with a tool.

According to an embodiment, the bolt is a serrated bolt such that a portion of a bolt shank of the bolt includes serrations to engage with the second receiving part. This allows the serrations of the bolt to engage with a second receiving part and generate a further mechanical lock. For example, a conventional serrated bolt or a preassembled bolt such as those described in FIGS.2A-2D of application EP 23207472.4 or FIGS. 3A-3D of application EP 24159985.1.

According to an embodiment, the bolt is configured to generate a further mechanical lock. Such that at least a portion of the bolt shank comes into contact with the receiving part at an end of the assembly opposite the nut. The contact between the portion of the bolt shank and the second receiving part generates another mechanical lock which further reduces or prevents slipping.

According to an embodiment, the opening of the second receiving part is greater than the circumference of at least a portion of a shaft of the bolt. This allows for insertion of the bolt into the assembly. The circumference of the shank of the bolt may be larger than the rest of the bolt shaft to engage with the second receiving part.

### Brief Description of the Drawings

The present disclosure will now be described in further detail with reference to the drawings that shows one embodiment of the present disclosure:
FIG. 1A is a perspective view of a nut with a sleeve to create a locking function according to at least one example of the disclosure;
FIG. 1B is a cross-sectional view of the sleeve of FIG. 1A;
FIG. 1C is an end view of the sleeve of FIG. 1A;
FIG. 2 is a cross-sectional view of a nut with a sleeve mated with a bolt;
FIG. 3 is a cross-sectional view of a nut with a threaded sleeve mated with a bolt;
FIGS. 4A - 4F are perspective views of nuts with sleeves with different surface textures of the exterior surface;
FIG. 5 is a cross sectional view of the nut with a sleeve connected to a bolt to assemble an assembly.

### Detailed Description

The present disclosure is directed to a nut with a sleeve for use with a fasteners such as bolts and/or screws. The nut includes a sleeve with an exterior surface configured to generate a mechanical lock between the sleeve and a receiving part of an assembly and can have any number of different surface textures including but not limited to smooth, dimples, rough turned, serrations, a knurled surface, spiral serrations, a hatched surface, and a pattern of bumps. The nut may be used with a bolt to create a bolted joint in assembling one or more receiving parts.

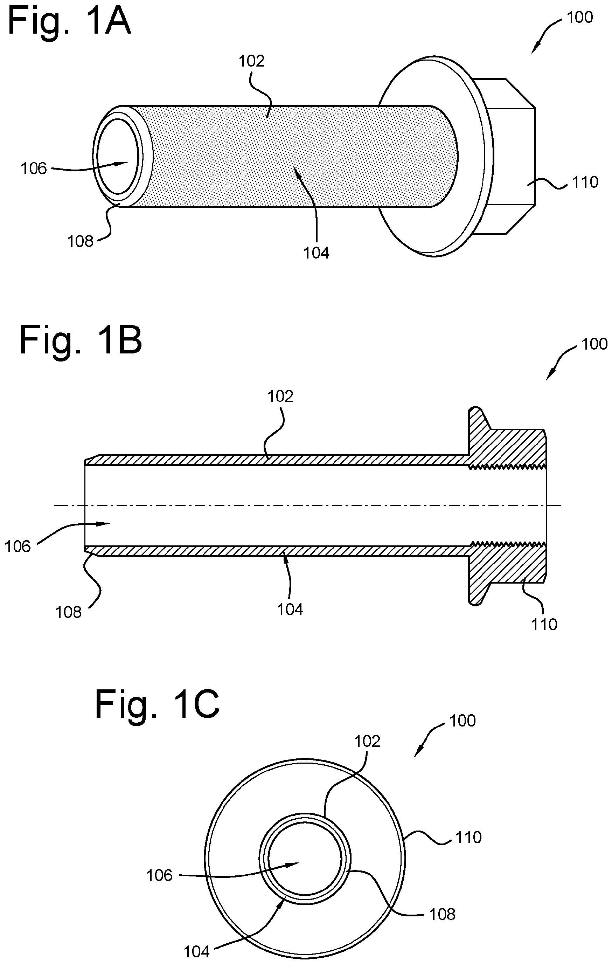

FIG. 1A is a perspective view of nut 100, FIG. 1B is a cross-sectional view of nut 100 and FIG. 1C is an end view of nut 100. Nut 100 includes sleeve 102 having exterior surface 104 and hollow interior 106 and bevel 108. The nut further includes nut head 110. Nut 100 is shown with a hexagonal nut head 110, but a person of skill in the art will understand that nut head 110 can be any shape, such as square, domed, round, flat, etc.

Sleeve 102 includes an exterior surface 104. Exterior surface 104 may include a texture which can extend over all or just part of exterior surface 104. For example, the texture may extend from a middle of sleeve 102 to one end of sleeve 102. In some embodiments (including that shown in Figs. 1A-1C), sleeve 102 has bevel 108 at one end of sleeve 102, which can help with insertion of sleeve 102 into a hole or cavity of a receiving part for forming a bolted joint. Sleeve 102 is typically hollow and includes hollow interior 106, which is typically cylindrical and extends through the length of sleeve 102. Hollow interior 106 may be sized and configured to fit around a shank of the bolt or a threaded length of the bolt.

The length of sleeve 102 may vary but is typically 0,5 to 3 times the diameter of the bolt for which it is intended to be used.

Sleeve 102 may be formed from steel, phosphorus steel, aluminum, plastic or any other material appropriate for the desired assembly depending on assembly requirements.

Typically, nut 100 would be integrally formed, for example, from cutting, stamping, machining, moulding, pressing, printing, or any other suitable method. Texturing of exterior surface 104 could be done by shot peening, knurling, etching, pressing or any other suitable method.

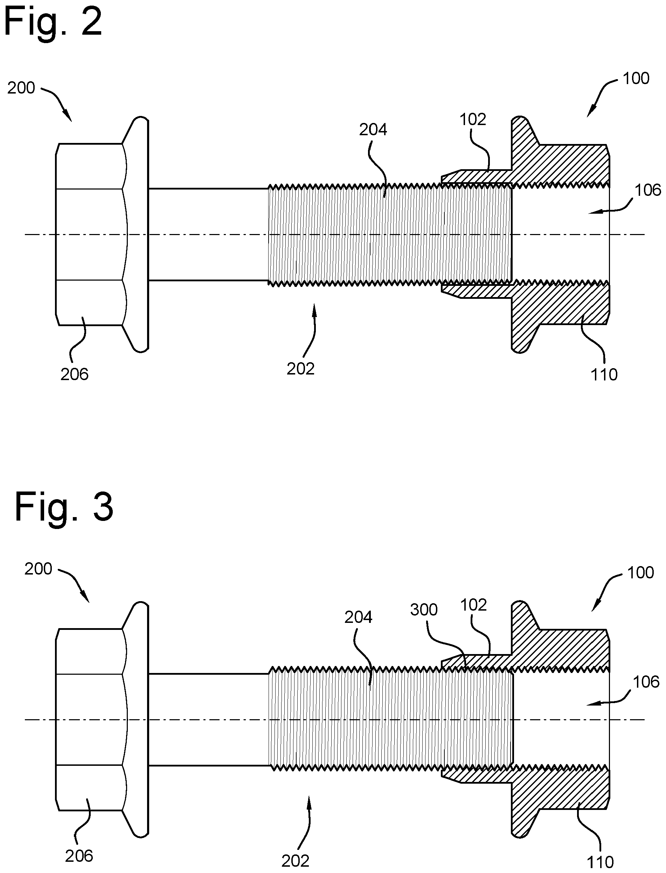

FIG. 2 is a cross-sectional view of nut 100 in combination with bolt 200. Nut 100 includes hollow interior 106 configured to receive bolt shaft 202 of bolt 200. Nut 100 includes nut head 110 which further includes threads configured to engage with the threaded portion 204 of bolt shaft 202.

Nut 100 also includes sleeve 102. Hollow interior 106 extends through sleeve 102 and nut head 110 such that hollow interior 106 can receive bolt shaft 202.

A tool may rotate bolt 200 at bolt head 206 such that threads of the threaded portion 204 of bolt shaft 202 engage with the threads of nut head 110.

FIG. 3 is a cross-sectional view of nut 100 in combination with bolt 200 similar to the combination of FIG. 2. Nut 100 includes hollow interior 106 configured to receive bolt shaft 202 of bolt 200. Nut 100 includes nut head 110 which further includes threads configured to engage with the threaded portion 204 of bolt shaft 202. Nut 100 may further include threads 300 which extend through hollow interior 106 and continue form the threads of nut head 110.

A tool may rotate bolt 200 at bolt head 206 such that threads of the threaded portion 204 of bolt shaft 202 further engages with the threads 300 of sleeve 102 and extend to the threads of nut head 110.

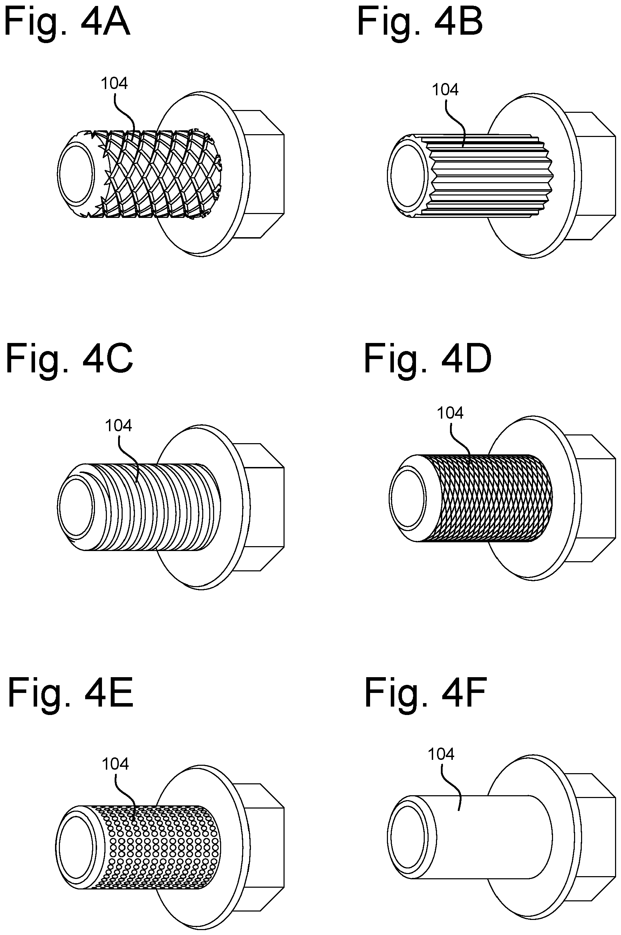

FIGS. 4A - 4F are views of exemplary exterior surfaces 104 of sleeve 102. These surfaces are examples of surfaces that may create a mechanical locking function in a bolted joint. These examples should be in no way limiting of the type of textured exterior surface capable of generating friction and/or a mechanical lock between sleeve 102 and a receiving part.

FIG. 4A illustrates a knurled exterior surface 104.

FIG. 4B illustrates a serrated exterior surface 104.

FIG. 4C illustrates a spiraled serrated exterior surface 104.

FIG. 4D illustrates a hatched exterior surface 104.

FIG. 4E illustrates a bumped exterior surface 104.

FIG. 4F illustrates a smooth exterior surface 104.

Exterior surfaces 104 of FIGS. 4A - 4F generate a mechanical lock between the nut and one or more receiving parts of an assembly. Exterior surface 104 may depend on the material of the nut and/or the material of the receiving part. It should be understood that exterior surface 104 may have a texture not pictured in FIGS. 4A - 4F.

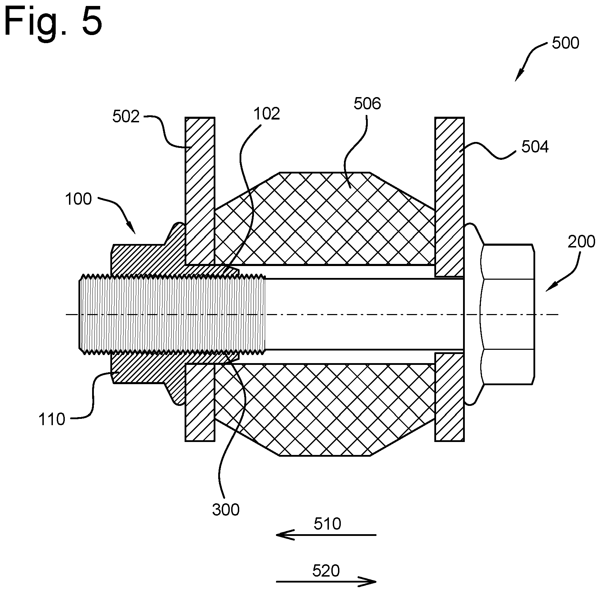

FIG. 5 illustrates a cross-sectional view of assembly 500 including nut 100 and bolt 200. Assembly 500 includes first receiving part 502 and second receiving part 506. Receiving part 504 may be a third receiving part or may be an opposite end of the same receiving part as first receiving part 502. Assembly 500 may be configured to receive bolt 200 such that bolt shaft 202 extends through receiving parts 502, 504, 506. Assembly 500 may be further configured to receive nut 100 such that sleeve 102 extends through at least receiving part 502 and 506.

For example, sleeve 102 may be configured to align an opening of receiving part 502 and an opening of receiving part 506 so that assembly 500 is in a desired configuration.

Nut 100 may be configured such that sleeve 102 is press fit into receiving parts 502 and 506. This eliminates the need for clearance for a tool at the nut end of assembly 500. The press fit fixes nut 100 such that it will not rotate or minimally rotate when receiving bolt 200. As bolt 200 rotates, the threaded portion of the bolt shaft engages with the threads 300 of nut 100 without rotating.

The press fit of sleeve 102 puts exterior surface 104 in contact with receiving parts 502 and 506. This contact creates a mechanical lock between nut 100, and receiving parts 502 and 506. Nut 100 is configured to receive bolt 200 such the threads of bolt 200 engage with the threads 300 of nut 100. Threads 300 may extend through all or part of hollow interior 106. As bolt 200 rotates and engages with threads 300 and nut 100 and bolt 200 tighten, nut 100 may minimally rotate.

The contact between exterior surface 104 and receiving parts 502 and 506 creates a bolted joint with a mechanical lock between nut 100 and receiving parts 502 and 506. The mechanical lock minimizes or prevents the bolted joint from loosening or slipping by absorbing at least some of the shear forces acting on the bolted joint.

Combing nut 100 and bolt 200 may only require clearance for a tool to rotate bolt 200 at the bolt head end of assembly 500. Bolt 200 may enter assembly 500 at an opening of receiving part 504. Sleeve 102 may horizontally align bolt shaft 202 in assembly 500.

The opening at receiving part 504 may be larger than a circumference of the threaded portion of bolt shaft 202. This allows easier insertion of bolt 200 into assembly 500.

A tool configured to rotate bolt 200 may engage or disengage bolt 200 to or from nut 100. For example, rotating bolt 200 clockwise may move bolt 200 in direction 510 and rotating bolt 200 counterclockwise may move bolt in direction 520. Direction 510 may be a tightening direction and direction 520 may be a loosening direction.

A portion of bolt shaft 202 nearest bolt head 206 may have a larger circumference than the threaded portion of bolt shaft 202. The larger circumference my include serrations such as may be found in a serration screw. As bolt 200 moves in direction 510, a portion of the shank of the bolt shaft may be configured contact receiving part 504. The bolt shank may tightly insert into an opening of receiving part 504 such that receiving part 504 is aligned with receiving parts 502 and 506.

Additionally, the contact between the bolt shank of bolt 200 may generate a further mechanical lock at the bolt end of assembly 500.

The mechanical lock created between nut 100 and receiving parts 502 and 506 creates a bolted joint that is more resistant to shear forces. Nut 100 reduces the area that shear forces can act on a bolt, thus reducing the overall shear forces acting on the bolt. As a result, the bolted joint is less likely to slip as compared to a conventional bolted joint. For example, a bolted joint in a motor or engine may be subject to shear forces during operation. Over time, the shear forces may loosen the bolted joint. Incorporating nut 100 into bolted joint reduces the shear area of the bolted joint such that less shear forces are acting on the bolt which minimizes or prevents slippage of the. This in turn may reduce overall maintenance needed on an assembly such as a motor or engine.

Because nut 100 reduces the amount of shear forces acting on a bolt of a bolted joint as compared to using conventional nuts, bolt size may be reduced without affecting performance. For example, depending on the assembly environment, a conventional M14 bolt in an assembly may be reduced to an M12 bolt with nut 100 because the M12 bolt with nut 100 can tolerate equal or greater shear forces than a convention M14 bolt.

Reducing bolt size in combination with nut 100 may reduce the overall weight of an assembly. For example, using an M12 bolt with nut 100 instead of a conventional M14 bolt. For M12 and M14 bolts with a nominal reference dimension of 90, an M12 bolt may wight 95 grams as compared to the weight of an M14 bolt of 134 grams. If an assembly requires 10 M14 bolts, they may replace with a M12 bolt in combination with nut 100. This would result in a reduced assembly weight of about 390 grams for an assembly that requires 10 bolts. It should be understood that assemblies requiring more bolts will have a greater reduction in weight and assemblies requiring less bolts will have a lesser reduction in weight. Including nut 100 may have the potential to reduce weight by 25 - 30% of bolt and nut combinations. Additionally, surround parts or mating parts of an assembly mays also be reduced.

Nut 100 in combination with bolt 200, such as a serrated bolt, may align receiving parts of an assembly and created bolted joints with a mechanical lock to prevent or minimize slipping from shear forces acting upon the bolt joints. For example, a vehicle in motion may have shear forces acting upon the bolted joints of the vehicle.

While the present disclosure has been described with reference to exemplary embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiments disclosed, but that the present disclosure will include all embodiments falling within the scope of the appended claims.

## Claims

1. A nut (100) comprising:
a sleeve (102) extending from a nut head (110) the nut (100) and configured to extend into a first receiving part (502) and a second receiving part (506), wherein the sleeve comprises;
an exterior surface (104) configured to engage with the first receiving part (502) and the second receiving part (506); and
a hollow interior (106) configured to receive a bolt shaft (202),
wherein the sleeve aligns the first receiving part (502) and the second receiving part (506).

2. The nut (100) of claim 1, wherein the hollow interior is threaded.

3. The nut (100) of claim 2, wherein the hollow interior (106) is and further configured to engage with a threaded portion (204) of the bolt shaft (202).

4. The nut (100) of any of the preceding claims, wherein the exterior surface (104) of the sleeve (102) is configured to generate a mechanical lock between the sleeve (102), the first receiving part (502), and the second receiving part (506).

5. The nut (100) of any of the preceding claims, wherein the nut (100) is formed of a ferrous material.

6. The nut (100) of any of the preceding claims, wherein the exterior surface (104) is knurled.

7. The nut (100) of any of claims 1-5, wherein the exterior surface (104) is smooth.

8. The nut (100) of any of the preceding claims, wherein a circumference of the sleeve (102) is configured to insert into a first opening of the first receiving part (502) and a second opening of the second receiving part (506), and wherein the exterior surface (104) is in contact with the first receiving part (502) and the second receiving part (506).

9. The nut (100) of claim 8, wherein the nut (100) is fixed as the bolt shaft (202) of a bolt (200) engages with the nut.

10. An assembly (500) comprising:
a nut (100) according to any of claims 1-9;
a first receiving part (502);
a second receiving part (506); and
a bolt (200), wherein a sleeve (102) of the nut (100) enters the assembly at the first receiving part (502) and extends through to the second receiving part (506), and wherein the bolt (200) enters a hollow interior (106) of the sleeve (102).

11. The assembly (500) of claim 10, wherein the bolt (200) is configured to rotate to engage with the nut (100).

12. The assembly (500) of claim 10 or 11, further comprising a clearance for a tightening tool at a bolt head (206) of the bolt (200), wherein the tightening tool rotates the bolt (200) to engage the nut (100) and assemble the assembly (500).

13. The assembly (500) of any of the preceding claims, wherein the bolt (200) is a serrated bolt .

14. The assembly (500) of any of the preceding claims, wherein the bolt (200) is configured to generate a further mechanical lock.

15. The assembly of any of the preceding claims, wherein an opening of the second receiving part (506) is greater than the circumference of at least a portion of a bolt shaft (202) of the bolt (200).
